# EUROPÄISCHE PATENTSCHRIFT

(11) **EP 2 535 540 B1**
(45) Veröffentlichungstag und Bekanntmachung des Hinweises auf die Patenterteilung: **20.07.2016**
(21) Anmeldenummer: 11170101.7
(22) Anmeldetag: 16.06.2011
(51) Int. Cl.: F02B 77/04, F02F 1/18, F16J 10/04

(54) **Einsatz für einen Zylinder einer Brennkraftmaschine**
Insert for a cylinder of a combustion engine
Insert pour un cylindre d'un moteur à combustion interne

(43) Veröffentlichungstag der Anmeldung: 19.12.2012
(73) Patentinhaber: Wärtsilä Switzerland Ltd., 8401 Winterthur (CH)
(72) Erfinder: Imhasly, David, 8400 Winterthur (CH)
(74) Vertreter: TBK

(56) Entgegenhaltungen:
- EP-A1- 0 684 411
- EP-A2- 1 061 294
- FR-A1- 2 763 362
- US-A1- 2010 319 661

## Beschreibung

Die vorliegende Erfindung betrifft einen Einsatz für einen Zylinder einer Brennkraftmaschine und eine Brennkraftmaschine mit zumindest einem Einsatz dieser Art.

Die Erfindung bezieht sich insbesondere auf einen sogenannten Anti-Polishing-Ring, der in einem Zylinder einer Brennkraftmaschine montiert wird, um Verschmutzungen im Bereich eines Feuerstegs eines Kolbens der Brennkraftmaschine zu entfernen.

Sogenannte Anti-Polishing-Ringe für Brennkraftmaschinen werden bereits weitläufig eingesetzt. Dabei besteht ein bekannter Anti-Polishing-Ring aus einem ringförmigen Element, das an einem oberen Bereich eines Zylinders oder einer Zylinderlaufbuchse eingesetzt wird, um beim Betrieb der Brennkraftmaschine den Bereich des Feuerstegs, nämlich den bezüglich des oberen Totpunkts oberen Bereich des Kolbens zu überstreichen und hierdurch Verschmutzungen zu entfernen, die sich aus unvollständiger Verbrennung oder Ähnlichem ergeben.

EP1061294A offenbart einen bekannten Anti-Polishing-Ring. Dieses ringförmige Element soll einen verengten Abschnitt der Innenwand des Zylinders bilden. Dabei wird eine gewisse Abnutzung des ringförmigen Einsatzes durch die Berührung des Feuerstegs und der inneren Umfangsfläche des ringförmigen Einsatzes in Kauf genommen. Durch Materialauswahl kann die Abnutzung des ringförmigen Einsatzes jedoch innerhalb gewisser Grenzen beschränkt werden.

Es ist die Aufgabe der vorliegenden Erfindung, einen Einsatz für einen Zylinder einer Brennkraftmaschine zur Entfernung von Verschmutzungen im Bereich eines Feuerstegs eines im Zylinder geführten Kolbens zur Verfügung zu stellen, der im Vergleich mit dem Stand der Technik eine verbesserte Haltbarkeit und gleichzeitig eine effektivere Funktion aufweist.

Die Aufgabe wird erfindungsgemäß durch einen Einsatz nach Anspruch 1 gelöst. Vorteilhafte Weiterbildungen der Erfindung sind in den abhängigen Ansprüchen definiert.

Erfindungsgemäß ist ein Einsatz für einen Zylinder einer Brennkraftmaschine zur Entfernung von Verschmutzungen im Bereich eines Feuerstegs eines im Zylinder geführten Kolbens bei Durchlaufen einer oberen Totpunktlage des Kolbens vorgesehen. Dieser Einsatz weist mindestens ein erstes ringförmiges Element, das an einer radialen Aussparung des Zylinders fest angebracht ist, und mindestens ein zweites ringförmiges Element auf, das in eine in dem ersten ringförmigen Element ausgebildete radiale Nut des ersten ringförmigen Elements eingesetzt ist. Das zweite ringförmige Element ist erfindungsgemäß in der Nut radial zum ersten ringförmigen Element beweglich und axial im Wesentlichen unbeweglich angeordnet.

Bei dem erfindungsgemäßen Einsatz wird somit ein erstes ringförmiges Element als Halteelement in den Zylinder eingesetzt und ist in diesem ersten ringförmigen Element das zweite ringförmige Element als eigentlicher Anti-Polishing-Ring vorgesehen. Dieses zweite ringförmige Element mit der Funktion zum Abstreifen von Verschmutzungen im Bereich des Feuerstegs ist in der Nut axial im Wesentlichen unbeweglich, so dass das zweite ringförmige Element seine Funktion erfüllen kann. Ferner ist das zweite ringförmige Element in der Nut radial beweglich, so dass unter gewissen Voraussetzungen die Funktion zur Entfernung von Verschmutzungen durch diese radiale Beweglichkeit verbessert werden kann. Insbesondere wird die radiale Position im Betrieb der zugeordneten Brennkraftmaschine selbsttätig zentriert.

Gemäß einer bevorzugten Ausführungsform ist der Innendurchmesser einer radial inneren Fläche des zweiten ringförmigen Elements so eingerichtet, dass die radial innere Fläche des zweiten ringförmigen Elements eine Außenumfangsfläche des Kolbens im Bereich des Feuerstegs bei Durchlaufen des oberen Totpunkts überstreicht, so dass die radial innere Fläche des zweiten ringförmigen Elements die Außenumfangsfläche des Kolbens berühren kann. Mit einer solchen Anordnung wird eine vorzügliche Effizienz zur Entfernung von Verschmutzungen im Bereich des Feuerstegs herbeigeführt und im Zusammenhang mit der radialen Beweglichkeit des zweiten ringförmigen Elements die Haltbarkeit des Einsatzes verbessert.

Gemäß einer bevorzugten Ausführungsform ist das zweite ringförmige Element in der Nut derart radial beweglich, dass die radial innere Fläche des zweiten Elements sich beim Überstreichen der Außenumfangsfläche des Kolbens im Bereich des Feuerstegs beim Durchlaufen des oberen Totpunkts zur Außenumfangsfläche des Kolbens im Wesentlichen zentriert. Hierdurch wird eine optimale Funktion des Einsatzes herbeigeführt, da im Wesentlichen alle Umfangsbereiche des Kolbens von dem zweiten ringförmigen Element gleichmäßig überstrichen werden können, so dass eine vollständige Entfernung der Verschmutzungen ermöglicht wird.

Gemäß einer bevorzugten Ausführungsform ist der Durchmesser am Grund der Nut mindestens um einen solchem Betrag größer als der Durchmesser der radial äußeren Fläche des zweiten ringförmigen Elements eingerichtet, so dass sich die radial innere Fläche des zweiten Elements beim Überstreichen der Außenumfangsfläche des Kolbens im Bereich des Feuerstegs beim Durchlaufen des oberen Totpunkts zur Außenumfangsfläche des Kolbens im Wesentlichen zentriert. Hierdurch wird eine axiale Beweglichkeit des zweiten ringförmigen Elements vorgesehen, die durch die Abmessung des Durchmessers am Grund der Nut herbeigeführt und eingestellt werden kann.

Gemäß einer bevorzugten Ausführungsform ist das Maß der radialen Beweglichkeit des zweiten ringförmigen Elements relativ zum ersten ringförmigen Element unter Berücksichtigung von Toleranzen der Zentrierung des Kolbens zum Zylinder insbesondere aufgrund von thermisch, fertigungstechnisch und/oder betrieblich verursachten Abweichungen eingerichtet. Unter Berücksichtigung der speziellen Anwendung und der Vorgaben der zugeordneten Brennkraftmaschine kann somit die radiale Beweglichkeit des zweiten ringförmigen Elements optimal eingerichtet werden, indem Toleranzen der Zentrierung des Kolbens zum Zylinder berücksichtigt werden, die sich aufgrund einer zyklischen Belastung ergeben, wobei auch fertigungstechnische oder betrieblich verursachte Abweichungen mit einfließen können.

Durch diese Anordnung ergeben sich somit weitere Freiheitsgrade bei der Fertigung von nicht nur dem Einsatz sondern auch des Kolbens und der zugehörigen Elemente, da unter Umständen größere Toleranzen im Bereich des Feuerstegs in Kauf genommen werden können.

Gemäß einer bevorzugten Ausführungsform ist der Durchmesser einer radial inneren Fläche des ersten ringförmigen Elements größer als der Durchmesser der radial inneren Fläche des zweiten ringförmigen Elements. Hierdurch wird ermöglicht, dass die radial innere Fläche des zweiten ringförmigen Elements in Kontakt mit dem Außendurchmesser des Kolbens gelangt, wohingegen die radial innere Fläche des ersten ringförmigen Elements einem Kontakt nicht ausgesetzt ist, so dass die Haltbarkeit dieses Elements verbessert wird.

Gemäß einer bevorzugten Ausführungsform ist die radiale Aussparung, in der das erste ringförmige Element fest angebracht wird, zum Ende des Zylinders am oberen Totpunkt offen und ist das erste ringförmige Element in die radiale Aussparung einpressbar. Durch diese Anordnung kann einerseits der Einsatz fest am Zylinder angebracht werden, so dass eine axial fixierte Position gewährleistet ist. Zum anderen ist es möglich, den gesamten Einsatz auszutauschen, falls dies erforderlich ist.

Gemäß einer bevorzugten Ausführungsform ist das zweite ringförmige Element als offener Ring mit einem Ringstoß ausgebildet. Hierdurch kann das zweite ringförmige Element in die Nut eingesetzt werden, ohne den gesamten Einsatz entfernen zu müssen. Dabei kann der Ringstoß so ausgebildet werden, dass durch die Vorspannung des zweiten ringförmigen Elements der Ringstoß unter Spannung steht, so dass das zweite ringförmige Element sich wie ein geschlossenes Element verhält. Hierzu können am Ringstoß beispielsweise wechselseitig umgekehrte radiale Absätze vorgesehen werden. Alternativ kann der Ringstoß auch mit Nut und Feder versehen sein.

Gemäß einer bevorzugten Ausführungsform ist in der radial inneren Fläche des ersten ringförmigen Elements zusätzlich zu der Nut eine zweite Nut vorgesehen und ist in die zweite Nut ein weiteres zweites ringförmiges Element eingesetzt. Hierdurch wird eine verbesserte Funktionalität des Systems herbeigeführt, da zwei ringförmige Elemente zum Abstreifen von Verschmutzungen dienen und somit gleichzeitig die Haltbarkeit der einzelnen Elemente verbessert wird.

Gemäß einer bevorzugten Ausführungsform ist das erste ringförmige Element aus einem ersten Ring und einem zweiten Ring ausgebildet, die in die radiale Aussparung einpressbar sind, wobei zwischen dem ersten Ring und dem zweiten Ring eine ringförmige Vertiefung ausgebildet wird, wenn der erste Ring und der zweite Ring axial in Anlage gebracht sind, wobei das zweite ringförmige Element in der ringförmigen Vertiefung angebracht ist.

Eine solche Anordnung ermöglicht eine verbesserte und vereinfachte Montage des Einsatzes, insbesondere wenn vorzugsweise ein geschlossener Ring verwendet wird. Hierzu wird erfindungsgemäß der erste Ring eingepresst, wird darauf das zweite ringförmige Element eingesetzt, und wird der zweite Ring auf den ersten Ring gepresst, so dass das zweite ringförmige Element in der sich ergebenden ringförmigen Vertiefung angeordnet ist.

Gemäß einer bevorzugten Ausführungsform bildet die ringförmige Vertiefung einen radial nach innen offenen Ringspalt als Nut, den ein radial nach innen ragender Ansatz des zweiten ringförmigen Elements durchdringt, wobei die axiale Abmessung des Ringspalts kleiner als die axiale Abmessung der ringförmigen Vertiefung ist, wobei der Ansatz die radial innere Fläche des zweiten ringförmigen Elements bildet.

Durch eine solche Anordnung kann einerseits eine axiale Sicherung des zweiten ringförmigen Elements bewirkt werden, während optional ein geschlossener Ring als zweites ringförmiges Element verwendet werden kann. Die Verwendung eines offenen Rings ist jedoch nach wie vor möglich und bietet die entsprechenden Vorteile. Die Funktion zum Abstreifen von Verschmutzungen im Bereich des Feuerstegs wird hierbei durch den Ansatz des zweiten ringförmigen Elements herbeigeführt, der durch den sich ergebenden Ringspalt ragt.

Gemäß einer bevorzugten Ausführungsform weist das zweite ringförmige Element eine Basis auf, die eine axiale Abmessung hat, die im Wesentlichen der axialen Abmessung der Vertiefung entspricht, während sich der Ansatz radial nach innen von der Basis erstreckt und eine axiale Abmessung hat, die im Wesentlichen der axialen Abmessung des Ringspalts entspricht.

Durch eine solche Anordnung kann eine verbesserte Haltbarkeit des Einsatzes herbeigeführt werden, da einerseits ein geschlossener Ring als zweites ringförmiges Element verwendet werden kann und andererseits die Basis, die in der Vertiefung angeordnet ist, verhindert, dass der Ring sich radial außerhalb gewisser Toleranzen bewegt. Insbesondere kann ein Herausfallen des zweiten ringförmigen Elements in die Brennkammer der zugeordneten Brennkraftmaschine auch im Zerstörungsfall des zweiten ringförmigen Elements verhindert werden. Zusätzlich wird die Stabilität des zweiten ringförmigen Elements durch die Basis verbessert.

Gemäß einer bevorzugten Ausführungsform weist das zweite ringförmige Element eine Basis auf, die in der axialen Richtung des zweiten ringförmigen Elements eine größere Ausdehnung als der Ansatz hat. Vorzugsweise ist die Form der Basis als sich in einer axialen Richtung erstreckende Erweiterung, eine sich in beide axiale Richtungen des zweiten ringförmigen Elements erstreckende Erweiterung mit einem abgeschrägten Übergang zwischen dem Ansatz und der Erweiterung, eine einzige sich in einer axialen Richtung erstreckenden Erweiterung mit einer Abschrägung am Übergang zwischen dem Ansatz und der Erweiterung, einer sich in einer axialen Richtung des zweiten ringförmigen Elements erstreckenden abgeschrägten Erweiterung oder einer sich in beide axiale Richtungen des zweiten ringförmigen Elements erstreckenden Abschrägung ausgebildet. Die Form des Ansatzes und insbesondere die Gestaltung des Querschnitts des zweiten ringförmigen Elements sind nicht auf die angegebenen Formen beschränkt. Besonders vorteilhaft bei dieser Ausführungsform ist jedoch allgemein eine Erweiterung am radial äußeren Bereich des zweiten ringförmigen Elements bezogen auf den Ansatz, der radial nach innen von der Basis vorragt.

Gemäß einer bevorzugten Ausführungsform weist eine Brennkraftmaschine einen Zylinder auf, in dem ein Kolben geführt wird, wobei ferner mindestens ein Einsatz vorgesehen ist, der vorstehend definiert ist.

Gemäß einer bevorzugten Ausführungsform weist der Zylinder eine Zylinderlaufbuchse auf, in der der Kolben geführt wird, wobei die radiale Aussparung, in der der mindestens eine Einsatz angebracht ist, in der Zylinderlaufbuchse ausgebildet ist.

Gemäß einer bevorzugten Ausführungsform sind zwei der vorstehend diskutierten Einsätze in der Aussparung axial benachbart vorgesehen. Hierdurch kann die Funktion des Anti-Polishing-Rings einerseits verbessert werden und können die Freiheitsgrade bei der Auswahl spezifischer Abmessungen erhöht werden.

### AUSFÜHRUNGSBEISPIELE

Im Folgenden werden Ausführungsbeispiele der vorliegenden Erfindung anhand der beigefügten Figuren erklärt.

### KURZBESCHREIBUNG DER ZEICHNUNGEN

Fig. 1 zeigt eine Schnittansicht eines Bereichs einer Brennkraftmaschine mit einem Einsatz gemäß dem ersten Ausführungsbeispiel der Erfindung.
Fig. 2 zeigt eine Schnittansicht eines Bereichs einer Brennkraftmaschine mit einem Einsatz gemäß dem zweiten Ausführungsbeispiel der Erfindung.
Fig. 3 zeigt einen vergrößerten Ausschnitt des Einsatzes des zweiten Ausführungsbeispiels der Erfindung.
Fig. 4 zeigt eine erste Abwandlung des zweiten Ausführungsbeispiels der Erfindung.
Fig. 5 zeigt eine zweite Abwandlung des zweiten Ausführungsbeispiels der Erfindung.
Fig. 6 zeigt eine dritte Abwandlung des zweiten Ausführungsbeispiels der Erfindung.
Fig. 7 zeigt eine vierte Abwandlung des zweiten Ausführungsbeispiels der Erfindung.
Fig. 8 zeigt eine fünfte Abwandlung des zweiten Ausführungsbeispiels der Erfindung.

### ERSTES AUSFÜHRUNGSBEISPIEL

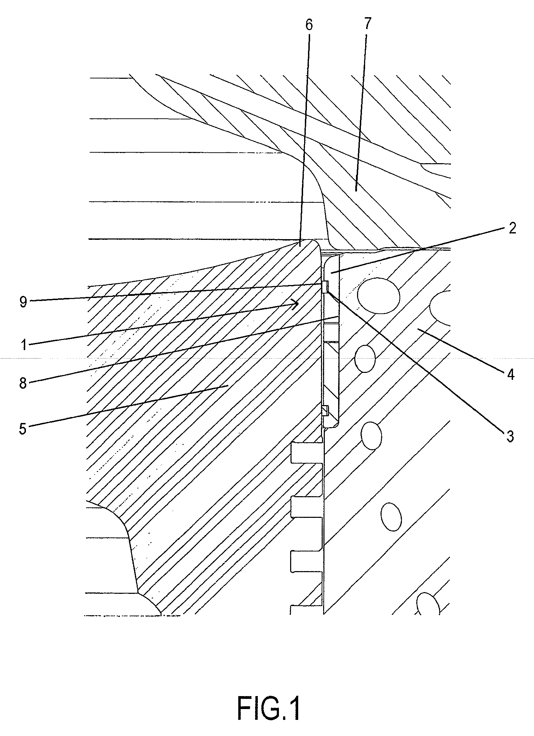

Fig. 1 zeigt eine Schnittansicht eines Bereichs einer Brennkraftmaschine in der Umgebung des Übergangs zwischen einem Zylinder 4 und einem Zylinderkopf 7. In dieser Ansicht ist der Kolben 5 im Bereich des oberen Totpunkts gezeigt.

Der Kolben 5 ist in bekannter Weise in dem Zylinder 4 verschiebbar angeordnet und begrenzt mit seiner Oberseite gemeinsam mit dem Zylinderkopf 7 eine Brennkammer, in der im Fall einer Dieselbrennkraftmaschine nach der Verdichtung angesaugter Luft Kraftstoff über eine nicht dargestellte Einspritzdüse eingespritzt wird. Außerdem weist eine solche bekannte Brennkraftmaschine zumindest ein Auslassventil auf, das jedoch zur Vereinfachung nicht dargestellt ist.

Der Kolben 5 weist an seinem oberen Bereich einen Abschnitt auf, der als Feuersteg 6 bezeichnet wird. Im Bereich dieses Feuerstegs 6 sammeln sich im Betrieb der Brennkraftmaschine Verschmutzungen am Außenumfang des Kolbens an. Diese Verschmutzung tritt insbesondere bei Verwendung von Schweröl als Kraftstoff auf.

Der Zylinder 4 in Fig. 1 weist eine radiale Aussparung 8 auf, die nach oben, d.h. in Richtung des oberen Totpunkts bzw. zum Zylinderkopf 7 hin offen ist. Die Aussparung ist im Wesentlichen zylindrisch angeordnet. In dieser Aussparung 8 ist im Ausführungsbeispiel von Fig. 1 ein erstes ringförmiges Element 2 vorgesehen, das aus einem geschlossenen Ring aus einem Metallwerkstoff hergestellt ist. Der Außendurchmesser des ersten ringförmigen Elements 2 ist derart ausgestaltet, dass sich eine Übermaßpassung bezüglich der Innendurchmesserfläche der Aussparung 8 ergibt. Diese Übermaßpassung ist so eingerichtet, dass im Betrieb ein fester Sitz des ersten ringförmigen Elements gewährleistet wird, so dass eine axiale Verschiebung des ersten ringförmigen Elements 2 vermieden wird. Alternativ oder ergänzend kann das erste ringförmige Element 2 durch einen Sicherungsring oder eine ähnliche Maßnahme gegen axiale Verschiebung gesichert werden.

In dem ersten ringförmigen Element 2 ist eine radiale Nut 9 vorgesehen, die radial nach innen offen ist. In diese radiale Nut 9 ist ein zweites ringförmiges Element eingesetzt, das einen Innendurchmesser hat, der geringfügig größer als der Innendurchmesser des ersten ringförmigen Elements 2 ist. Die Nut weist einen Grund auf, der durch eine Umfangsfläche gebildet wird, die in der Nut 9 ausgebildet ist und radial nach innen weist. Die radiale Abmessung dieser Fläche, die den Grund der Nut 9 bildet, ist größer als der Außendurchmesser eines zweiten ringförmigen Elements 3, das in die Nut 9 eingesetzt wird.

Das zweite ringförmige Element 3 weist einen Ringstoß auf, so dass der Ring in die Nut 9 des ersten ringförmigen Elements 2 nach einer elastischen Verformung des zweiten ringförmigen Elements 3 eingesetzt werden kann. Durch die elastische Eigenschaft des zweiten ringförmigen Elements 3 kann der Ringstoß unter Spannung im Eingriff gehalten werden, so dass sich insbesondere durch die spezielle Ausgestaltung des Ringstoßes mit einem Absatz oder Ähnlichem die Eigenschaft eines geschlossenen Rings ergeben kann.

Da der Außendurchmesser des zweiten ringförmigen Elements 3 kleiner als der Durchmesser der Fläche im Grund der Nut 9 ist, kann das zweite ringförmige Element 3 sich in der Ebene bewegen, die senkrecht zu der axialen Richtung des Kolbens bzw. des zweiten ringförmigen Elements 3 ist.

Der Innendurchmesser des zweiten ringförmigen Elements 3 ist so eingerichtet, dass beim Durchlaufen des oberen Totpunkts des Kolbens 5 der Außenumfang im Bereich des Feuerstegs 6 von dem zweiten ringförmigen Element 3 überstrichen wird und insbesondere den Außenumfang im Bereich des Kolbens 6 berühren kann. Durch eine solche Berührung bzw. ein Überstreichen wird sich ablagernde Verschmutzung in diesem Bereich vom Außenumfang des Kolbens 5 im Bereich des Feuerstegs 6 abgestriffen.

Insbesondere bei großdimensionierten Brennkraftmaschinen, wie z.B. solchen Dieselbrennkraftmaschinen, die für leistungsstarke Stationäranwendungen oder für Schiffsantriebe vorgesehen sind, ergeben sich relative Toleranzen hinsichtlich der Fertigung oder durch den zyklischen Betrieb der Brennkraftmaschine beispielsweise aufgrund von unterschiedlichen thermischen Belastungen der Elemente, wie z.B. des Kolbens. Aufgrund der großen Abmessung bei solchen Brennkraftmaschinen ergeben sich daher große absolute Abweichungen beispielsweise bezüglich der konzentrischen Ausrichtung der äußeren Umfangsfläche des Kolbens 5 im Bereich des Feuerstegs 6. Durch die erfindungsgemäße Anordnung mit dem zweiten ringförmigen Element 3, das axial beweglich in der Nut 9 aufgenommen ist, wird eine automatische bzw. selbsttätige Zentrierung der Innenumfangsfläche des zweiten ringförmigen Elements 3 bezüglich des Außendurchmessers des Kolbens 5 im Bereich des Feuerstegs 6 bewirkt. Hierdurch kann eine gleichmäßige Entfernung von sich aufbauenden Verschmutzungen im Bereich des Feuerstegs 6 herbeigeführt werden. Außerdem wird einer zu hohen Druckbelastung zwischen der inneren Umfangsfläche des zweiten ringförmigen Elements 3 und dem Außenumfang im Bereich des Feuerstegs 6 entgegengewirkt, da durch die axial bewegliche Anordnung des zweiten ringförmigen Elements ein ständiger Abgleich der Position des zweiten ringförmigen Elements 3 bewirkt wird.

Erfindungsgemäß kann das erste ringförmige Element 2 bei Wartungsarbeiten aus der radialen Aussparung 8 des Zylinders 4 herausgenommen werden und durch ein neues Bauteil ersetzt werden. Alternativ kann bei Wartungsarbeiten das zweite ringförmige Element 3 ausgetauscht werden. Da der Innendruchmesser des ersten ringförmigen Elements 2 größer als der Durchmesser der inneren Umfangsfläche des zweiten ringförmigen Elements 3 ist, unterliegt lediglich das zweite ringförmige Element 3 einer Abnutzung aufgrund des Betriebs der Brennkraftmaschine.

Das erste ringförmige Element 2 kann beispielsweise aus 34CrMo4 hergestellt werden. Das zweite ringförmige Element 3 kann beispielsweise als temperaturbeständiger Gussring gefertigt werden. Diese Angaben sind jedoch lediglich beispielhafter Natur und andere Werkstoffe können verwendet werden, solange die Funktion des Einsatzes gewährleistet wird. Grundsätzlich sollte jedoch das Material des zweiten ringförmigen Elements 3 weicher sein als das Material des Kolbens 5 zumindest im Bereich des Feuerstegs 6, so dass eine Abnutzung an dem zweiten ringförmigen Element 3 stattfindet und somit die Abnutzung des Kolbens 5 verhindert werden kann.

Als Alternative kann in einer Brennkraftmaschine in die radiale Aussparung 8 ein zweiter Einsatz vorgesehen werden, so dass zwei im Wesentlichen identische Einsätze vorgesehen sind. In diesem Fall wird die Wirksamkeit zum Abstreifen der Verschmutzungen weitergehend verbessert. Hierzu werden zwei erste ringförmige Element 2 mit jeweils einer radialen Nut 9 in die Aussparung 8 eingesetzt. In die radiale Nut 9 wird dann ein zweites ringförmiges Element 3 eingesetzt.

Als weitere Alternative kann der Einsatz aus einem ersten ringförmigen Element 2 bestehen, in welchem zwei axial beanstandete radiale Nuten 9 vorgesehen sind, in die jeweils ein zweites ringförmiges Element 2 eingesetzt wird.

### ZWEITES AUSFÜHRUNGSBEISPIEL

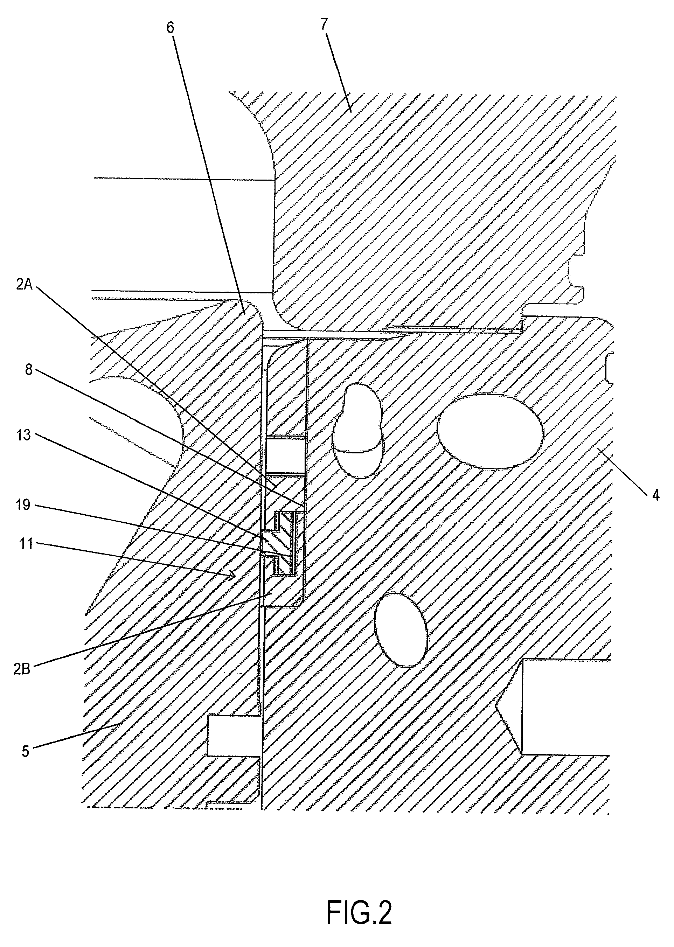

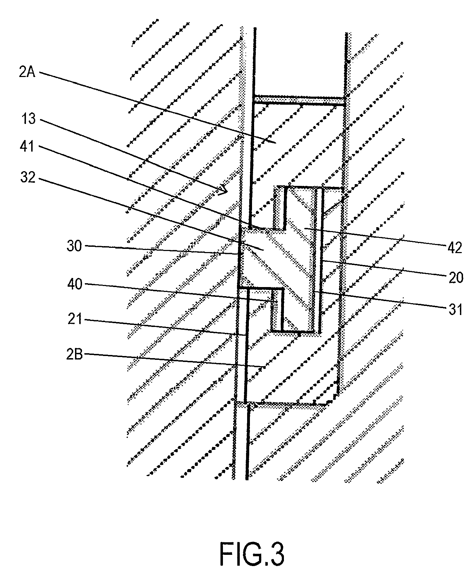

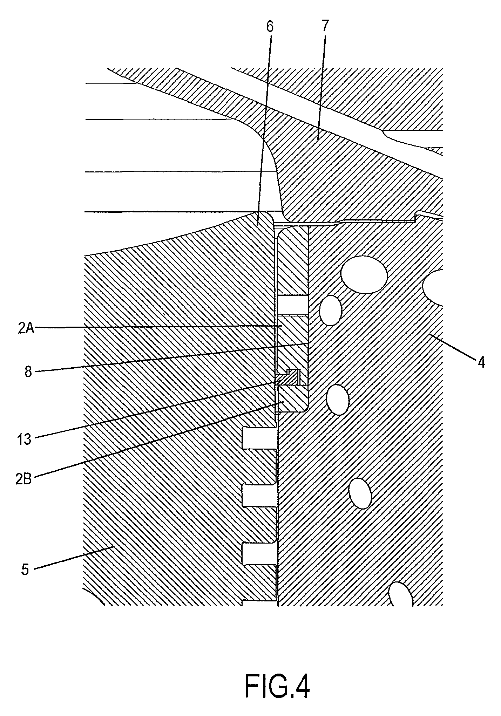

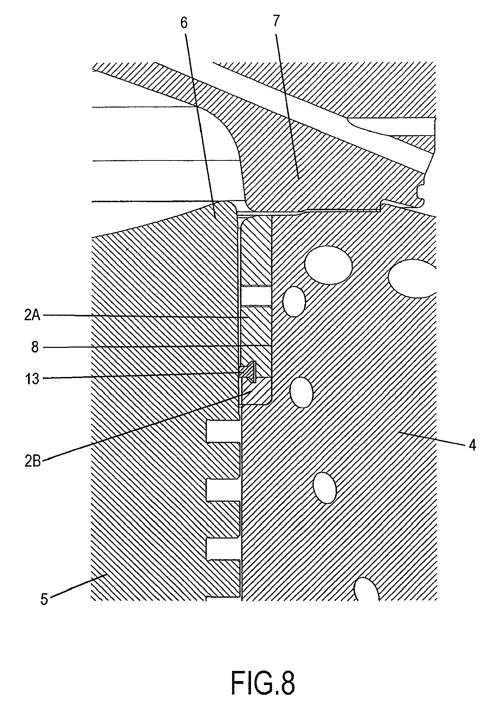

Ein zweites Ausführungsbeispiel der Erfindung wird unter Bezugnahme auf Fig. 2 und Fig. 3 beschrieben, während weitere Abwandlungen dieses Ausführungsbeispiels in den Figuren 4-8 dargestellt sind.

Fig. 2 zeigt in einer ähnlichen Ansicht wie Fig. 1 eine Schnittansicht einer Brennkraftmaschine im Bereich des Übergangs zwischen dem Zylinder 4 und dem Zylinderkopf 7. In dem Zylinder ist ebenfalls eine radiale Aussparung 8 vorgesehen. In diese radiale Aussparung 8 ist ein erstes ringförmiges Element eingesetzt, das im zweiten Ausführungsbeispiel aus zwei getrennten Ringen als Teilelement 2A und Teilelement 2B besteht. An der unteren Seite in der radialen Aussparung 8 ist das untere Teilelement 2B eingepresst. Auf diesem unteren Teilelement 2B ist das obere Teilelement 2A in die radiale Aussparung 8 gepresst. Das untere Teilelement 2B weist einen nach oben weisenden Ansatz auf, der mit einer axial ausgerichteten Fläche des oberen Teilelements 2A in Anlage gelangen kann. Im eingepressten Zustand bilden die Teilelemente 2A, 2B eine radiale Nut in der Form einer ringförmigen Vertiefung 40, die einen radial nach innen (zum Brennraum) offenen Ringspalt als Nut bildet.

Die Teilelemente 2A, 2B werden ebenfalls mit einer Übermaßpassung in die radiale Aussparung 8 eingepresst.

Das zweite ringförmige Element 13 gemäß dem zweiten Ausführungsbeispiel weist einen radial nach innen ragenden Ansatz 32 auf, der sich von einer Basis 42 des zweiten ringförmigen Elements 13 erstreckt. Die Basis 42 hat eine größere axiale Abmessung als der Ansatz 32. Die axiale Abmessung des Ansatzes 32 entspricht im Wesentlichen der axialen Abmessung des offenen Ringspalts, wenn die Teilelemente 2A, 2B sich in Anlage aneinander befinden.

Im montierten Zustand bilden die Teilelemente 2A, 2B eine radial nach innen weisende Fläche mit einem Innendurchmesser, der größer als der Innendruchmesser ist, der an einer radial nach innen weisenden Fläche des Ansatzes 32 vorliegt. Im montierten Zustand ragt somit der Ansatz 32 aus der nach innen weisenden Fläche der montierten Teilelemente 2A, 2B vor.

Die Montage des Einsatzes gemäß dem zweiten Ausführungsbeispiel wird wie folgt vorgenommen. Zunächst wird das untere Teilelement 2B in die radiale Aussparung 8 eingepresst. Darauf wird das zweite ringförmige Element 13 von oben in die noch oben offene Vertiefung 40 eingesetzt. Schließlich wird das obere Teilelement 2A in die radiale Aussparung 8 eingepresst, bis dieses in Anlage an das untere Teilelement 2B gebracht ist.

Gemäß dem zweiten Ausführungsbeispiel kann als zweites ringförmiges Element 13 eine Form verwendet werden, die als geschlossener Ring ausgebildet ist. Insbesondere kann ein Ring ohne offenen Ringstoß verwendet werden. Ferner wird durch die Basis 42 mit der gegenüber dem Ansatz 32 vergrößerten axialen Abmessungen bewirkt, dass im montierten Zustand ein Herausspringen des zweiten ringförmigen Elements 13 aus der Nut unmöglich wird. Somit wird auch im Zerstörungsfall des zweiten ringförmigen Elements, beispielsweise durch Zerbrechen in mehrere Sektorelemente, ein Herausfallen in den Brennraum verhindert. Ferner kann die Stabilität des zweiten ringförmigen Elements 13 durch die verstärkte Basis 42 und die geschlossene Ausführung verbessert werden.

Das erste ringförmige Element gemäß dem zweiten Ausführungsbeispiel, insbesondere das untere Teilelement 2B weist eine radial nach innen weisende Fläche innerhalb der Vertiefung 40 auf, die einen größeren Durchmesser als die nach außen weisende Umfangsfläche des zweiten ringförmigen Elements 13 hat. Somit ergibt sich wie im ersten Ausführungsbeispiel eine radiale Verschieblichkeit des zweiten ringförmigen Elements 13 gegenüber dem ersten ringförmigen Element 2A, 2B im montierten Zustand und somit relativ zum Außenumfang des Kolbens 5. Somit werden gemäß dem zweiten Ausführungsbeispiel dieselben Wirkungen erzielt wie diejenigen, die im ersten Ausführungsbeispiel dargestellt sind.

Als Alternative können wie im ersten Ausführungsbeispiel zwei identische Einsätze in eine radiale Aussparung 8 eingesetzt werden, wodurch sich eine weitergehend verbesserte Wirkung ergibt. Alternativ können der Einsatz aus dem ersten Ausführungsbeispiel und der Einsatz aus dem zweiten Ausführungsbeispiel kombiniert in einer radialen Aussparung 8 verwendet werden.

### ABWANDLUNGEN

Im Folgenden werden einige Abwandlungen des zweiten Ausführungsbeispiels erläutert.

Fig. 4 zeigt eine erste Abwandlung des zweiten Ausführungsbeispiels. Bei dieser ersten Abwandlung sind die Teilelemente 2A, 2B sowie das zweite ringförmige Element 13 abgewandelt. Insbesondere ist das zweite ringförmige Element mit einer sich in axialer Richtung erstreckenden Erweiterung versehen, die im montierten Zustand in einer entsprechenden Vertiefung im Teilelement 2A liegt. Somit hat das zweite ringförmige Element 13 in dieser Abwandlung im Wesentlichen eine L-Form im Querschnitt.

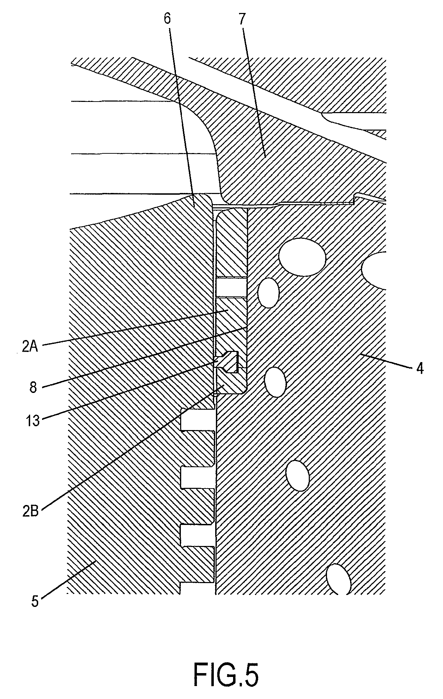

In einer zweiten Abwandlung des zweiten Ausführungsbeispiels, die in Fig. 5 gezeigt ist, weist das zweite ringförmige Element 13 zwei sich axial in entgegengesetzte Richtungen erstreckende Erweiterungen auf, die am Übergang zwischen dem Ansatz 32 und den Erweiterungen eine Abschrägung aufweisen.

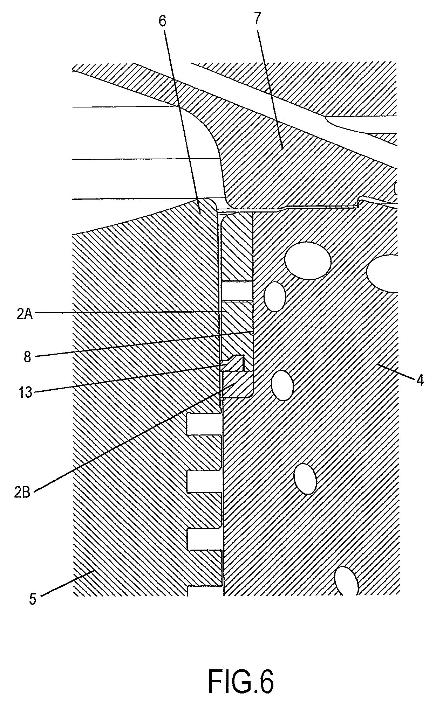

In einer dritten Abwandlungen des zweiten Ausführungsbeispiels, die in Fig. 6 dargestellt ist, ist lediglich eine Erweiterung in der axialen Richtung des zweiten ringförmigen Elements 13 vorgesehen, wobei am Übergang zwischen dem Ansatz 32 und der Erweiterung einer Abschrägung vorgesehen ist.

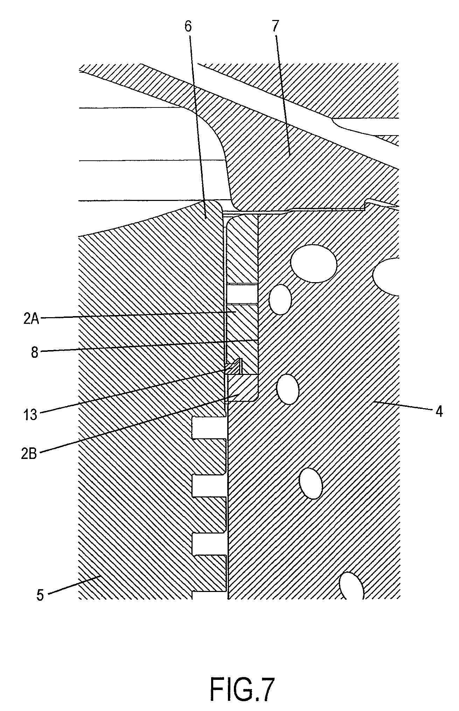

In einer vierten Abwandlung des zweiten Ausführungsbeispiels, die in Fig. 7 gezeigt ist, ist an dem zweiten ringförmigen Element 13 eine sich in axialer Richtung erstreckender Erweiterung vorgesehen, die insgesamt eine Abschrägung darstellt, die sich von dem Ansatz 32 erstreckt.

In einer fünften Abwandlung des zweiten Ausführungsbeispiels ist ein zweites ringförmiges Element 13 vorgesehen, das zwei sich axial in entgegengesetzte Richtungen erstreckende Erweiterungen aufweist, die insgesamt als Abschrägungen ausgehend von dem Ansatz 32 ausgebildet sind.

Die vorstehend angegebenen Abwandlungen belegen, dass das zweite Ausführungsbeispiel nicht auf die spezifische dargestellte Form zu beschränken ist und das zweite ringförmige Element 13 gemeinsam mit den Teilelementen 2A, 2B abgewandelt werden kann, so dass die Wirkungen und Vorteile dieselben sind wie im zweiten Ausführungsbeispiel dargestellt ist. Hierbei ist zu beachten, dass die Teilelemente 2A, 2B an die Formen des zweiten ringförmigen Elements 13 angepasst werden können, wie auch in den Figuren dargestellt ist.

### ERGÄNZENDES

Die vorliegende Erfindung wurde in Anwendung auf eine Dieselbrennkraftmaschine erläutert. Insbesondere bei großvolumigen Dieselbrennkraftmaschinen ergibt sich der Bedarf, den Außenumfang im Bereich des Feuerstegs 6 von Verschmutzungen zu befreien, da bei solchen Dieselbrennkraftmaschinen häufig Schweröl als Kraftstoff eingesetzt wird. Jedoch ist die vorliegende Erfindung ebenfalls anwendbar auf andere Bauarten, insbesondere Ottomotoren, 4-Takt- oder 2-Taktdieselkraftmaschinen.

In den Figuren wurde die radiale Aussparung 8 als Aussparung dargestellt, die direkt im Zylinder 4 ausgeführt ist. Jedoch kann die Aussparung 8 auch in einer Laufbuchse ausgeführt werden, die in den Zylinder eingesetzt ist.

Die im ersten Ausführungsbeispiel angegebene Materialauswahl kann auch auf das zweite Ausführungsbeispiel angewendet werden. Insgesamt ist diese Materialauswahl jedoch nicht beschränkt.

Im zweiten Ausführungsbeispiel wurde das zweite ringförmige Element 13 als geschlossener Ring dargestellt. Jedoch kann auch hier ein offener Ring mit einem Ringstoß verwendet werden, wie im ersten Ausführungsbeispiel angegeben ist.

## Patentansprüche

1. Einsatz (1; 11) für einen Zylinder (4) einer Brennkraftmaschine zur Entfernung von Verschmutzungen im Bereich eines Feuerstegs (6) eines im Zylinder (4) führbaren Kolbens (5) bei Durchlaufen einer oberen Totpunktlage des Kolbens (5), mit
mindestens einem ersten ringförmigen Element (2; 2A, 2B), das in einer radialen Aussparung (8) des Zylinders (4) fest anbringbar ist, und
mindestens einem zweiten ringförmigen Element (3; 13), das in eine in dem ersten ringförmigen Element (2; 2A, 2B) ausgebildete radiale Nut (9; 19) des ersten ringförmigen Elements (2; 2A, 2B) eingesetzt ist,
wobei das zweite ringförmige Element (3; 13) in der Nut relativ zum ersten ringförmigen Element (2; 2A, 2B) radial beweglich und axial im Wesentlichen unbeweglich ist.

2. Einsatz (1; 11) nach Anspruch 1, wobei der Innendurchmesser einer radial inneren Fläche (30) des zweiten ringförmigen Elements (3; 13) so eingerichtet ist, dass die radial innere Fläche (30) des zweiten ringförmigen Elements (3; 13) eine Außenumfangsfläche des Kolbens (5) im Bereich des Feuerstegs (6) bei Durchlaufen des oberen Totpunkts überstreicht, so dass die radial innere Fläche (30) des zweiten ringförmigen Elements (3; 13) die Außenumfangsfläche des Kolbens (5) berühren kann.

3. Einsatz (1; 11) nach Anspruch 1 oder 2, wobei das zweite ringförmige Element (3; 13) in der Nut (9; 19) derart radial beweglich ist, dass die radial innere Fläche (30) des zweiten Elements (3; 13) sich beim Überstreichen der Außenumfangsfläche des Kolbens (5) im Bereich des Feuerstegs (6) beim Durchlaufen des oberen Totpunkts zur Außenumfangsfläche des Kolbens (5) im Wesentlichen zentriert.

4. Einsatz (1; 11) nach Anspruch 2, wobei der Durchmesser am Grund (20) der Nut (9; 19) mindestens um einen solchen Betrag größer als der Durchmesser der radial äußeren Fläche (31) des zweiten ringförmigen Elements (3; 13) eingerichtet ist, dass sich die radial innere Fläche (30) des zweiten Elements (3; 13) beim Überstreichen der Außenumfangsfläche des Kolbens (5) im Bereich des Feuerstegs (6) beim Durchlaufen des oberen Totpunkts zur Außenumfangsfläche des Kolbens (5) im Wesentlichen zentriert.

5. Einsatz (1; 11) nach einem der vorhergehenden Ansprüche, wobei das Maß der radialen Beweglichkeit des zweiten ringförmigen Elements (3; 13) relativ zum ersten ringförmigen Element (2; 2A, 2B) unter Berücksichtigung von Toleranzen der Zentrierung des Kolbens (5) zum Zylinder (4) insbesondere aufgrund von thermisch, fertigungstechnisch und/oder betrieblich verursachten Abweichungen eingerichtet ist.

6. Einsatz (1) nach einem der vorhergehenden Ansprüche, wobei der Durchmesser einer radial inneren Fläche (21) des ersten ringförmigen Elements (2; 2A, 2B) größer als der Durchmesser der radial inneren Fläche (30) des zweiten ringförmigen Elements (3; 13) ist.

7. Einsatz (1; 11) nach einem der vorhergehenden Ansprüche, wobei die radiale Aussparung (8), in der das erste ringförmige Element (2; 2A, 2B) fest angebracht wird, zum Ende des Zylinders (4) am oberen Totpunkt offen ist und das erste ringförmige Element (2; 2A, 2B) in die radiale Aussparung (8) einpressbar ist.

8. Einsatz (1; 11) nach einem der vorhergehenden Ansprüche, wobei das zweite ringförmige Element (3; 13) als offener Ring mit einem Ringstoß ausgebildet ist.

9. Einsatz (1) nach einem der vorhergehenden Ansprüche, wobei in der radial inneren Fläche (21) des ersten ringförmigen Elements (2) zusätzlich zu der Nut (9) eine zweite Nut vorgesehen ist und in die zweite Nut ein weiteres zweites ringförmiges Element (3) eingesetzt ist.

10. Einsatz (11) nach einem der vorhergehenden Ansprüche, wobei das erste ringförmige Element (2A, 2B) aus einem ersten Ring (2A) und einem zweiten Ring (2B) besteht, die in die radiale Aussparung (8) einpressbar sind, wobei zwischen dem ersten Ring (2A) und dem zweiten Ring (2B) eine ringförmige Vertiefung (40) ausgebildet wird, wenn der erste Ring (2A) und der zweite Ring (2B) axial in Anlage gebracht sind, wobei das zweite ringförmige Element (13) in der ringförmigen Vertiefung (40) angebracht ist.

11. Einsatz (11) nach Anspruch 10, wobei die ringförmige Vertiefung (40) einen radial nach innen offenen Ringspalt als Nut bildet, den ein radial nach innen ragender Ansatz (32) des zweiten ringförmigen Elements (13) durchdringt, wobei die axiale Abmessung des Ringspalts (41) kleiner als die axiale Abmessung der ringförmigen Vertiefung (40) ist, wobei der Ansatz (32) die radial innere Fläche des zweiten ringförmigen Elements (13) bildet.

12. Einsatz (11) nach einem der Ansprüche 10 und 11, wobei das zweite ringförmige Element (13) eine Basis (42) aufweist, die eine axiale Abmessung und/oder eine Form hat, die im Wesentlichen an die axiale Abmessung und/oder eine Form der Vertiefung (40) angepasst ist, während sich der Ansatz (32) radial nach innen von der Basis (42) erstreckt und eine axiale Abmessung hat, die im Wesentlichen der axialen Abmessung des Ringspalts (41) entspricht.

13. Brennkraftmaschine mit einem Zylinder (4), in dem ein Kolben (5) geführt wird, ferner mit mindestens einem Einsatz (1; 11) nach einem der vorhergehenden Ansprüche.

14. Brennkraftmaschine nach Anspruch 13, wobei der Zylinder (4) eine Zylinderlaufbuchse aufweist, in der der Kolben geführt wird, wobei die radiale Aussparung (8), in der der mindestens eine Einsatz (1; 11) angebracht ist, in der Zylinderlaufbuchse ausgebildet ist.

15. Brennkraftmaschine nach Anspruch 13 oder 14, wobei zwei der Einsätze (1, 1'; 11, 11') in der Aussparung (8) axial benachbart vorgesehen sind.

## Claims

1. Insert (1; 11) for a cylinder (4) of an internal combustion engine for removing contaminants in the region of a firing land (6) of a piston (5) which can be guided in the cylinder (4) when passing through a top dead centre position of the piston (5), having
at least one first annular element (2; 2A, 2B) which can be attached fixedly in a radial cut-out (8) of the cylinder (4), and
at least one second annular element (3; 13) which is inserted into a radial groove (9; 19) of the first annular element (2; 2A, 2B), which radial groove (9; 19) is configured in the first annular element (2; 2A, 2B),
the second annular element (3; 13) being radially movable and axially substantially immovable in the groove relative to the first annular element (2; 2A; 2B).

2. Insert (1; 11) according to Claim 1, the internal diameter of a radially inner face (30) of the second annular element (3; 13) being set up in such a way that the radially inner face (30) of the second annular element (3; 13) sweeps over an outer circumferential face of the piston (5) in the region of the firing land (6) when passing through the top dead centre, with the result that the radially inner face (30) of the second annular element (3; 13) can come into contact with the outer circumferential face of the piston (5).

3. Insert (1; 11) according to Claim 1 or 2, the second annular element (3; 13) being radially movable in the groove (9; 19) in such a way that the radially inner face (30) of the second element (3; 13) is substantially centred with respect to the outer circumferential face of the piston (5) when sweeping over the outer circumferential face of the piston (5) in the region of the firing land (6) when passing through the top dead centre.

4. Insert (1; 11) according to Claim 2, the diameter at the bottom (20) of the groove (9; 19) being set up to be greater than the diameter of the radially outer face (31) of the second annular element (3; 13) at least by an amount such that the radially inner face (30) of the second element (3; 13) is centred substantially with respect to the outer circumferential face of the piston (5) when sweeping over the outer circumferential face of the piston (5) in the region of the firing land (6) when passing through the top dead centre.

5. Insert (1; 11) according to one of the preceding claims, the amount of radial movability of the second annular element (3; 13) relative to the first annular element (2; 2A, 2B) being set up under consideration of tolerances of the centring action of the piston (5) with respect to the cylinder (4), in particular on account of deviations which are caused thermally, by production technology and/or operationally.

6. Insert (1) according to one of the preceding claims, the diameter of a radially inner face (21) of the first annular element (2; 2A, 2B) being greater than the diameter of the radially inner face (30) of the second annular element (3; 13).

7. Insert (1; 11) according to one of the preceding claims, the radial cut-out (8), in which the first annular element (2; 2A, 2B) is attached fixedly, being open towards the end of the cylinder (4) at the top dead centre, and the first annular element (2; 2A, 2B) being able to be pressed into the radial cut-out (8).

8. Insert (1; 11) according to one of the preceding claims, the second annular element (3; 13) being configured as an open ring with an annular joint.

9. Insert (1) according to one of the preceding claims, a second groove being provided in addition to the groove (9) in the radially inner face (21) of the first annular element (2), and a further second annular element (3) being inserted into the second groove.

10. Insert (11) according to one of the preceding claims, the first annular element (2A, 2B) consisting of a first ring (2A) and a second ring (2B), which rings can be pressed into the radial cut-out (8), an annular depression (40) being configured between the first ring (2A) and the second ring (2B) when the first ring (2A) and the second ring (2B) are brought axially into contact, the second annular element (13) being attached in the annular depression (40).

11. Insert (11) according to Claim 10, the annular depression (40) forming a radially inwardly open annular gap as a groove which is penetrated by a radially inwardly protruding projection (32) of the second annular element (13), the axial dimension of the annular gap (41) being smaller than the axial dimension of the annular depression (40), the projection (32) forming the radially inner face of the second annular element (13).

12. Insert (11) according to either of Claims 10 and 11, the second annular element (13) having a base (42) which has an axial dimension and/or a shape which is adapted substantially to the axial dimension and/or a shape of the depression (40), whereas the projection (32) extends radially inwards from the base (42) and has an axial dimension which corresponds substantially to the axial dimension of the annular gap (41).

13. Internal combustion engine having a cylinder (4), in which a piston (5) is guided, having, furthermore, at least one insert (1; 11) according to one of the preceding claims.

14. Internal combustion engine according to Claim 13, the cylinder (4) having a cylinder liner, in which the piston is guided, the radial cut-out (8), in which the at least one insert (1; 11) is attached, being configured in the cylinder liner.

15. Internal combustion engine according to Claim 13 or 14, two of the inserts (1, 1'; 11, 11') being provided in an axially adjacent manner in the cut-out (8).

## Revendications

1. Garniture (1; 11) pour un cylindre (4) de moteur à combustion interne, destinée à enlever les encrassements au niveau de la bague supérieure (6) d'un piston (5) guidé dans le cylindre (4) lorsque le piston (5) traverse la position de point mort haut, la garniture présentant
au moins un premier élément annulaire (2; 2A, 2B) qui peut être placé fixement dans une découpe radiale (8) du cylindre (4) et
au moins un deuxième élément annulaire (3; 13) inséré dans une rainure radiale (9; 19) du premier élément annulaire (2; 2A, 2B), formée dans le premier élément annulaire (2; 2A, 2B),
le deuxième élément annulaire (3; 13) pouvant se déplacer radialement dans la rainure par rapport au premier élément annulaire (2; 2A, 2B) et est essentiellement immobile dans la direction axiale.

2. Garniture (1; 11) selon la revendication 1, dans laquelle le diamètre intérieure d'une surface radialement intérieure (30) du deuxième élément annulaire (3; 13) est défini de telle sorte que la surface radialement intérieure (30) du deuxième élément annulaire (3; 13) balaye la surface périphérique extérieure du piston (5) au niveau de la bague supérieure (6) lors du passage par le point mort haut de telle sorte que la surface radialement intérieure (30) du deuxième élément annulaire (3; 13) puisse toucher la surface périphérique extérieure du piston (5).

3. Garniture (1; 11) selon les revendications 1 ou 2, dans laquelle le deuxième élément annulaire (3; 13) peut se déplacer radialement dans la rainure (9; 19) de telle sorte que la surface radialement intérieure (30) du deuxième élément (3; 13) se centre essentiellement sur la surface périphérique extérieure du piston (5) lors du balayage de la surface périphérique extérieure du piston (5) au niveau de la bague supérieure (6) lors du passage par le point mort haut.

4. Garniture (1; 11) selon la revendication 2, dans laquelle le diamètre à la base (20) de la rainure (9; 19) est supérieur au diamètre de la surface radialement extérieure (31) du deuxième élément annulaire (3; 13) d'une valeur telle que la surface radialement intérieure (30) du deuxième élément (3; 13) se centre essentiellement par rapport à la surface périphérique extérieure du piston (5) lors du balayage de la surface périphérique extérieure du piston (5) au niveau de la bague supérieure (6) lors du passage par le point mort haut.

5. Garniture (1; 11) selon l'une des revendications précédentes, dans laquelle l'étendue de la mobilité radiale du deuxième élément annulaire (3; 13) par rapport au premier élément annulaire (2; 2A, 2B) en tenant compte des tolérances de centrage du piston (5) par rapport au cylindre (4), est conçue en particulier sur la base d'écarts thermiques, de fabrication et/ou provoqués en fonctionnement.

6. Garniture (1; 11) selon l'une des revendications précédentes, dans laquelle le diamètre d'une surface radialement intérieure (21) du premier élément annulaire (2; 2A, 2B) est supérieur au diamètre de la surface radialement intérieure (30) du deuxième élément annulaire (3; 13).

7. Garniture (1; 11) selon l'une des revendications précédentes, dans laquelle la découpe radiale (8) dans laquelle le premier élément annulaire (2; 2A, 2B) est installé fixement est ouvert en direction de l'extrémité du cylindre (4) au point mort haut et le premier élément annulaire (2; 2A, 2B) peut être enfoncé dans la découpe radiale.

8. Garniture (1; 11) selon l'une des revendications précédentes, dans laquelle le deuxième élément annulaire (3; 13) est configuré comme anneau ouvert doté d'une coupure d'anneau.

9. Garniture (1) selon l'une des revendications précédentes, dans laquelle une deuxième rainure est prévue en plus de la rainure (9) dans la surface radialement intérieure (21) du premier élément annulaire (2) et un autre deuxième élément annulaire (3) est inséré dans la deuxième rainure.

10. Garniture (11) selon l'une des revendications précédentes, dans laquelle le premier élément annulaire (2A, 2B) est constitué d'une première bague (2A) et d'une deuxième bague (2B) qui peuvent être enfoncées dans la découpe radiale (8), un creux annulaire (40) étant formé entre la première bague (2A) et la deuxième bague (2B) lorsque la première bague (2A) et la deuxième bague (2B) sont placées axialement l'une contre l'autre, le deuxième élément annulaire (13) étant placé dans le creux annulaire (40).

11. Garniture (11) selon la revendication 10, dans laquelle le creux annulaire (40) forme un interstice annulaire ouvert radialement vers l'intérieur et servant de rainure, qu'un appendice (32) débordant radialement vers l'intérieur du deuxième élément annulaire (13) traverse, la dimension axiale de l'interstice annulaire (41) étant inférieure à la dimension axiale du creux annulaire (40), l'appendice (32) formant la surface radialement intérieure du deuxième élément annulaire (13).

12. Garniture (11) selon l'une des revendications 10 et 11, dans laquelle le deuxième élément annulaire (13) présente une base (42) qui a une dimension axiale et/ou une forme qui sont adaptées essentiellement à la dimension axiale et/ou à la forme du creux (40) tandis que l'appendice (32) s'étend radialement vers l'intérieur à partir de la base (42) et a une dimension axiale qui correspond essentiellement à la dimension axiale de l'interstice annulaire (41).

13. Moteur à combustion interne doté d'un cylindre (4) dans lequel est guidé un piston (5) et présentant en outre au moins une garniture (1; 11) selon l'une des revendications précédentes.

14. Moteur à combustion interne selon la revendication 13, dans lequel le cylindre (4) présente une chemise de cylindre dans laquelle le piston est guidé, la découpe radiale (8) dans laquelle la ou les garnitures (1; 11) sont placées étant formée dans la chemise de cylindre.

15. Moteur à combustion interne selon les revendications 13 ou 14, dans lequel deux des garnitures (1, 1', 11, 11') sont prévues en voisinage axial dans la découpe (8).
